# EUROPÄISCHE PATENTSCHRIFT

(11) **EP 2 931 585 B1**
(45) Veröffentlichungstag und Bekanntmachung des Hinweises auf die Patenterteilung: **15.02.2017**
(21) Anmeldenummer: 13830183.3
(22) Anmeldetag: 12.12.2013
(51) Int. Cl.: B60P 1/00, B60D 1/06, B60D 1/14, B60D 1/24, B60B 35/00, B60B 35/04, B62D 63/06, B60G 7/02, B62D 21/14, B62D 21/20, B60B 35/10, B62D 7/20, B60D 1/46, B60B 11/00, B62D 53/06

(54) **TRANSPORTFAHRZEUG MIT VARIABLER BREITE UND SPURWEITE UND MINDESTENS EINER LENKACHSE**
TRANSPORT VEHICLE WITH VARIABLE WIDTH AND TRACK WIDTH AND AT LEAST ONE RADIAL AXLE
VÉHICULE DE TRANSPORT À LARGEUR ET À VOIE VARIABLES, POURVU D'AU MOINS UN ESSIEU DIRECTEUR

(30) Priorität: 12.12.2012 DE 202012011898 U; 12.12.2012 DE 102012024247; 19.09.2013 DE 202013008269 U
(43) Veröffentlichungstag der Anmeldung: 21.10.2015
(73) Patentinhaber: Scheuerle Fahrzeugfabrik GmbH, 74629 Pfedelbach (DE)
(72) Erfinder: KERN, Florian, 74629 Pfedelbach (DE)
(74) Vertreter: Leitner, Waldemar
(86) Internationale Anmeldenummer: PCT/EP2013/003755
(87) Internationale Veröffentlichungsnummer: WO 2014/090407

(56) Entgegenhaltungen:
- EP-A2- 1 150 876
- DE-A1- 1 958 197
- DE-A1- 2 219 447
- DE-A1- 2 253 956
- US-A- 4 221 398
- US-A- 4 359 123

## Beschreibung

Die Erfindung betrifft ein Transportfahrzeug mit variabler Breite und Spurweite, einem Fahrgestell und mindestens einer Lenkachse mit zwei Rad-Drehgestellen gemäß dem Oberbegriff des Anspruchs 1. Die Erfindung betrifft insbesondere einen Tieflader mit variabler Breite und Spurweite.

Zum Transport von Lasten mit Überbreite bzw. zur Rückfahrt ohne Last ist es von Vorteil, wenn die Breite und Spurweite des zum Transport verwendeten Fahrzeugs verändert werden kann. Außerdem gibt es in einigen Bundesstaaten der USA spezielle gesetzliche Bestimmungen für Transportfahrzeuge zum Transport von Lasten mit Übergewicht, durch welche die zulässige Last pro Achse in Abhängigkeit von der Spurweite des Fahrzeugs beschränkt wird, so dass eine veränderbare Spurweite von Vorteil ist, um die gesetzlichen Bestimmungen zu erfüllen und die maximal mögliche Achslast auszunutzen.

Transportfahrzeuge mit einer Breite und Spurweite, die bei Bedarf verändert werden kann, sind beispielsweise aus der US-A-4 772 038, der US-A-5 118 245 oder der US-A-5 326 128 bekannt. Weiter offenbart die US-A-3 339 942 einen Tieflader mit variabler Spurweite, dessen Breite bei Leerfahrten reduziert werden kann. Der Tieflader weist zwei Paare von Starrachsen auf, wobei das vordere Achspaar über einen ersten Schwanenhals drehbar mit der Zugmaschine verbunden ist und das hintere Achspaar über einen zweiten Schwanenhals drehbar mit dem ersten Schwanenhals verbunden ist, um die Manövrierfähigkeit des Tiefladers zu verbessern. Jedoch ist auf diese Weise nur eine begrenzte Verbesserung der Manövrierfähigkeit möglich.

Aus der US-A-4 221 398 ist bereits ein Transportfahrzeug der eingangs genannten Art in Form eines Deichselanhängers und eines Tiefladers mit mehreren Lenkachsen bekannt, dessen Breite und Spurweite ebenfalls bei Bedarf vergrößert bzw. verkleinert werden können, indem zwei Fahrgestellteile, die jeweils eine Reihe von Rad-Drehgestellen tragen, quer zur Fahrtrichtung bzw. zu einer vertikalen Längsmittelebene des Transportfahrzeugs auseinander bzw. zusammen bewegt werden. Die Rad-Drehgestelle jeder Lenkachse werden dort unabhängig voneinander mittels getrennter Lenkzylinder gelenkt, die in jedem der beiden Fahrgestellteile angeordnet sind. Dadurch werden jedoch zum einen verhältnismäßig viele Lenkzylinder für die Lenkung benötigt. Zum anderen kann nicht gewährleistet werden, dass beim Lenken die Lenkwinkel der beiden Rad-Drehgestelle der Lenkachse und damit die Einschlagwinkel der zugehörigen Räder oder Radpaare ein gewünschtes Verhältnis aufweisen.

Die DE 2 219 447 A offenbart ein ähnliches Transportfahrzeug in Form eines Tiefladers mit zwei Traversen oder Längsträgern, die jeweils eine Reihe von hintereinander angeordneten lenkbaren Rad-Drehgestellen tragen, sowie mit zwei Zugvorrichtungen. Um beim Lenken die Rad-Drehgestelle beider Traversen gleichzeitig zu lenken, sind insgesamt vier arretierbare und teleskopierbare Spurstangen vorgesehen, die paarweise zwischen jeder der Zugvorrichtungen und den Rad-Drehgestellen der benachbarten Lenk- oder Pendelachse angeordnet sind. Dies bedeutet jedoch, dass bei jeder Verstellung der Breite und Spurweite des Tiefladers die Länge von allen vier teleskopierbaren Spurstangen verstellt und nach der Verstellung erneut arretiert werden muss, was erhebliche Rüstzeiten verursacht. Zudem schließen die teleskopierbaren Spurstangen mit der Fahrzeuglängsachse einen Winkel von ungleich 90 Grad ein, der sich bei der Verstellung der Breite und Spurweite des Tiefladers auch noch verändert, so dass das Maß der notwendigen Längenverstellung der Spurstangen nicht dem Maß der Verstellung der Spurweite entspricht, sondern für die verschiedenen Spurweiten in Abhängigkeit von der Winkellage der Spurstangen berechnet werden muss. Darüber hinaus führt das Einschlagen einer Zugvorrichtung zu unterschiedlichen Winkelausrichtungen der beiden beiderseits der Zugvorrichtung angeordneten Spurstangen, so dass zur Übertragung der Schwenkbewegung der Zugvorrichtung auf die beiden Rad-Drehgestelle der benachbarten Lenk- oder Pendelachse trotz einer relativ komplizierten Kinematik zweifelhaft erscheint, ob die Lenkwinkel dieser beiden Rad-Drehgestelle identisch sind.

Die DE 22 53 958 A1, die DE 19 58 197 A1, die EP 1 150 876 A2 und die US 4 359 123 A zeigen die Verwendung von längenverstellbaren Querspurstangen zwischen zwei Rädern einer Lenkachse.

Ausgehend hiervon liegt der Erfindung die Aufgabe zugrunde, ein Transportfahrzeug der eingangs genannten Art mit variabler Breite und Spurweite dahingehend zu verbessern, dass nicht nur mit einfacheren Mitteln und mit geringerem Aufwand beim Lenken identische Lenkwinkel der beiden Rad-Drehgestelle jeder Lenkachse und damit identische Einschlagwinkel der zugehörigen Räder oder Radpaare gewährleistet sondern auch die Rüstzeiten und der Arbeitsaufwand bei der Verstellung der Breite und Spurweite verringert werden können.

Die erfindungsgemäße Lösung der Aufgabe erfolgt durch ein Transportfahrzeug mit den Merkmalen des Anspruchs 1. Vorteilhafte Weiterbildungen ergeben sich aus den Unteransprüchen.

Erfindungsgemäß ist unabhängig von der Anzahl der Lenkachsen nur eine einzige längenverstellbare Querspurstange vorgesehen, so dass der Zeit- und Arbeitsaufwand zum Verstellen der Länge der Querspurstange bei einer Veränderung der Breite oder Spurweite des Transportfahrzeugs minimiert werden kann.

Durch die erfindungsgemäße Merkmalskombination kann zudem beim Lenken gewährleistet werden, dass die Rad-Drehgestelle und damit sämtliche Räder oder Radpaare jeder Lenkachse ungeachtet der jeweils eingestellten Spurweite um identische Lenk- oder Einschlagwinkel gedreht werden.

Um die Manövrierfähigkeit des Transportfahrzeugs zu vergrößern, weist dieses vorteilhaft eine Mehrzahl von Lenkachsen auf, wobei die beiden Rahmenteile jeweils eine Reihe von Rad-Drehgestellen tragen, die hintereinander entlang der Rahmenteile angeordnet sind.

Wie bereits ausgeführt wurde, sind die Rad-Drehgestelle der beiden Reihen erfindungsgemäß nur durch eine einzige längenverstellbare Querspurstange verbunden. Die Querspurstange verbindet dabei zweckmäßig zwei Lenkhebel, von denen jeder in einem der beiden Rahmenteile schwenkbar gelagert und drehfest mit einem vom Rahmenteil getragenen Rad-Drehgestell verbunden ist.

Um die Längenverstellung der Querspurstange zu erleichtern, sieht eine bevorzugte Weiterbildung der Erfindung vor, dass die Querspurstange mindestens zwei Teile umfasst, die in Bezug zueinander in Richtung einer Längsachse der Querspurstange verschiebbar sind und sich in vorgegebenen Verschiebestellungen unbeweglich fixieren lassen, wobei die Abstände zwischen den vorgegebenen Verschiebestellungen bzw. die Längendifferenzen der Querspurstange in den vorgegebenen Verschiebestellungen dem jeweiligen Maß der gewünschten Vergrößerung oder Verkleinerung der Spurweite entsprechen. Vorzugsweise ist die Querspurstange teleskopierbar und besteht aus mindestens zwei ineinander geschobenen röhrenförmigen Elementen, am besten aus koaxialen Zylinderrohren, die sich in Richtung einer Längsachse der Querspurstange auseinander ziehen lassen.

Zweckmäßig können bei dem Transportfahrzeug mehrere, vorzugsweise drei verschiedene diskrete Breiten und Spurweiten eingestellt werden, in welchem Fall die Querspurstange gemäß einer vorteilhaften Weiterbildung der Erfindung mehrere, vorzugsweise drei koaxiale röhrenförmige Elemente umfasst, die in Bezug zueinander in Richtung ihrer Längsachsen verschiebbar sind und sich in Bezug zueinander in verschiedenen Verschiebestellungen fixieren lassen, in denen entweder alle röhrenförmigen Elemente zusammen geschoben oder ein bzw. mehrere röhrenförmige Elemente ausgezogen sind.

Die Fixierung der röhrenförmigen Elemente in Bezug zueinander erfolgt vorzugsweise mittels Bolzen, die sich durch fluchtende Querbohrungen von mindestens zwei der röhrenförmigen Elemente erstrecken. Auf diese Weise braucht zur Längenverstellung der Querspurstange nur ein Bolzen aus zwei fluchtenden Querbohrungen heraus gezogen und nach der Verkürzung oder Verlängerung der Querspurstange durch Teleskopieren der röhrenförmigen Elemente wieder durch zwei fluchtende Querbohrungen hindurch gesteckt und gesichert werden.

Eine weitere bevorzugte Weiterbildung der Erfindung sieht vor, dass die zwei durch die Querspurstange miteinander verbundenen Lenkhebel jeweils zwischen zwei benachbarten Rad-Drehgestellen an einem der Fahrgestellteile angelenkt und vorteilhaft mit einem Lenkzylinder verbunden sind. Die Lenkzylinder dienen zum Verschwenken der Lenkhebel in Bezug zu den Fahrgestellteilen, um die Rad-Drehgestelle der Lenkachse oder der Lenkachsen zu drehen und dadurch die Räder einzuschlagen.

Die beiden durch die Querspurstange miteinander verbundenen Lenkhebel sind zwischen zwei Lenkachsen z. B. zwischen einer ersten und einer zweiten Lenkachse, angeordnet, wobei jeder der beiden Lenkhebel durch mindestens eine Längsspurstange mit einem Lenkhebel der dazugehörigen Rad-Drehgestelle, z. B. dem ersten und dem zweiten Rad-Drehgestell, in derselben Reihe verbunden ist.

Der Lenkhebel eines Rad-Drehgestells, z. B. des zweiten Rad-Drehgestells, jeder Reihe ist vorzugsweise durch eine weitere Längsspurstange mit einem Lenkhebel eines darauffolgenden Rad-Drehgestells, z. B. des dritten Rad-Drehgestells dieser Reihe, verbunden, der wiederum durch eine weitere Längsspurstange mit einem Lenkhebel eines weiteren Rad-Drehgestells, z. B. des vierten Rad-Drehgestells jeder Reihe verbunden ist, so dass die Anzahl der Lenkachsen des Transportfahrzeugs in modularer Weise dem Bedarf entsprechend angepasst werden kann, ohne dass mehr als eine einzige längenverstellbare Querspurstange erforderlich ist bzw. ohne dass bei einer Verstellung der Spurweite die Länge von mehr als einer Querspurstange angepasst werden muss.

Vorteilhaft ist das Übersetzungsverhältnis der Lenkübersetzung bei den durch die Querspurstange verbundenen Lenkhebeln größer als bei den übrigen Lenkhebeln des Transportfahrzeugs, so dass infolge von größeren Hebelarmen die zum Lenken benötigte Kraft geringer ist und damit Lenkzylinder mit kleineren Durchmessern verwendet werden können.

Zweckmäßig weisen die durch Längsspurstangen miteinander verbundenen Lenkhebel benachbarter Lenkachsen jeweils eine Mehrzahl von Löchern zum Anschlagen der Längsspurstangen auf, die in unterschiedlichen Abständen von der Drehachse des Rad-Drehgestells angeordnet sind, so dass durch Auswahl eines geeigneten Lochs eine gewünschte Lenkübersetzung für die Rad-Drehgestelle jeder Lenkachse ausgewählt und dadurch für die Rad-Drehgestelle der verschiedenen Lenkachsen jeweils der korrekte Lenkwinkel in Bezug zu einem gemeinsamen Lenkpol eingestellt werden kann. Der Angriffspunkt der Längsspurstangen an den Lenkhebeln bzw. die dadurch bedingte Lenkübersetzung wird zweckmäßig so gewählt, dass die kurveninneren Rad-Drehgestelle der vordersten und der hintersten Lenkachse den größten Lenkwinkel besitzen.

Grundsätzlich ist es aber auch möglich, Lenkhebel zweier Rad-Drehgestelle von mindestens einer Lenkachse direkt durch eine längenverstellbare Querspurstange zu verbinden, wenn an den Rad-Drehgestellen identische Lenkwinkel eingestellt werden sollen.

Da zum Transport von Schwerlasten dienende Transportfahrzeuge ein verhältnismäßig großes Eigengewicht besitzen, sieht eine weitere bevorzugte Weiterbildung der Erfindung vor, dass das Transportfahrzeug Mittel zum Anheben des Fahrgestells umfasst, so dass die Räder oder Radpaare des Transportfahrzeugs vor einer Veränderung der Spurweite oder Breite vom Untergrund abgehoben werden können, um die Seitwärtsverschiebung der beiden Fahrgestellteile durch eine erhebliche Reduzierung des Reibwiderstands zu erleichtern. Die Mittel zum Anheben des Fahrgestells umfassen vorteilhaft mehrere vertikale Hydraulik-Stützen, die nach Art eines hydraulischen Wagenhebers arbeiten.

Zur Seitwärtsverschiebung der zwei seitlichen Fahrgestellteile in Bezug zu einem mittleren Fahrgestellteil wird bevorzugt mindestens ein mobiler Hydraulikzylinder verwendet, der sich abwechselnd zwischen den mittleren Fahrgestellteil und einen der beiden seitlichen Fahrgestellteile einsetzen lässt, um die beiden seitlichen Fahrgestellteile bei angehobenem Fahrgestell einzeln nacheinander auf den mittleren Fahrgestellteil zu oder von diesem weg zu bewegen.

Eine vorteilhafte Weiterbildung der Erfindung sieht vor, dass das Transportfahrzeug den mittleren Fahrgestellteil mit mindestens einen der beiden seitlichen Fahrgestellteile verbindende Querträger aufweist. Diese sind gemäß einer ersten Variante teleskopierbar ausgebildet. Eine zweite Variante der Erfindung sieht vor, dass die Querträger eine definierte Länge aufweisen und dass das oder die seitlichen Fahrgestellteile entlang der Querträger verschiebbar sind.

Gemäß einer weiteren vorteilhaften Weiterbildung der Erfindung umfasst das Transportfahrzeug mindestens einen modularen Lasttragteil und einen mit dem Lasttragteil verbundenen oder verbindbaren Schwanenhals, dessen Breite entsprechend dem Maß der Vergrößerung oder Verkleinerung der Spurweite verstellbar ist. Vorteilhaft weist der Schwanenhals einen lösbar mit dem Lasttragteil verbindbaren Kupplungsteil auf, der zwei quer zur Längsmittelebene des Transportfahrzeugs verstellbare und starr mit den Fahrgestellteilen verbindbare Seitenteile umfasst.

Im Folgenden wird die Erfindung anhand von zwei in den Zeichnungen dargestellten Ausführungsbeispielen näher erläutert.
- Figur 1:: zeigt eine perspektivische Ansicht eines Lasttragteils eines Transportfahrzeugs mit verstellbarer Breite und Spurweite bei seiner schmalsten Breiten- und Spurweiten-Einstellung gemäß einem ersten Ausführungsbeispiel;
- Figur 2:: zeigt eine Oberseitenansicht des Lasttragteils des Transportfahrzeugs bei der schmalsten Breiten- und Spurweiten-Einstellung;
- Figur 3:: zeigt eine teilweise weg geschnittene perspektivische Ansicht eines vorderen Endabschnitts des Lasttragteils bei der schmalsten Breiten- und Spurweiten-Einstellung;
- Figur 4:: zeigt eine Draufsicht auf eine Querspurstange des Lasttragteils bei der schmalsten Breiten- und Spurweiten-Einstellung bei Betrachtung in der Einbaulage;
- Figur 5:: zeigt eine Vorderseitenansicht der Querspurstange aus Fig. 4 bei Betrachtung in der Einbaulage;
- Figur 6:: zeigt eine Ansicht entsprechend Fig. 1, jedoch bei einer mittleren Breiten- und Spurweiten-Einstellung;
- Figur 7:: zeigt eine Ansicht entsprechend Fig. 2, jedoch bei der mittleren Breiten- und Spurweiten-Einstellung;
- Figur 8:: zeigt eine Ansicht entsprechend Fig. 3, jedoch bei der mittleren Breiten- und Spurweiten-Einstellung;
- Figur 9:: zeigt eine Ansicht entsprechend Fig. 4, jedoch bei der mittleren Breiten- und Spurweiten-Einstellung;
- Figur 10:: zeigt eine Ansicht entsprechend Fig. 5, jedoch bei der mittleren Breiten- und Spurweiten-Einstellung;
- Figur 11:: zeigt eine Ansicht entsprechend Fig. 1 und 6, jedoch bei einer breitesten Breiten- und Spurweiten-Einstellung;
- Figur 12:: zeigt eine Ansicht entsprechend Fig. 2 und 7, jedoch bei der breitesten Breiten- und Spurweiten-Einstellung;
- Figur 13:: zeigt eine Ansicht entsprechend Fig. 3 und 8, jedoch bei der breitesten Breiten- und Spurweiten-Einstellung;
- Figur 14:: zeigt eine Ansicht entsprechend Fig. 4 und 9, jedoch bei der breitesten Breiten- und Spurweiten-Einstellung;
- Figur 15:: zeigt eine Ansicht entsprechend Fig. 5 und 10, jedoch bei der breitesten Breiten- und Spurweiten-Einstellung;
- Figur 16:: zeigt eine Stirnseitenansicht des Lasttragteils bei der schmalsten Breiten- und Spurweiten-Einstellung;
- Fig. 17: zeigt eine Stirnseitenansicht des Lasttragteils bei der mittleren Breiten- und Spurweiten-Einstellung;
- Figur 18:: zeigt eine Stirnseitenansicht des Lasttragteils bei der breitesten Breiten- und Spurweiten-Einstellung;
- Figur 19:: zeigt eine perspektivische Ansicht des Lasttragteils, jedoch in einem vom Untergrund abgehobenen Zustand zur Verstellung der Breite und Spurweite;
- Figur 20:: zeigt eine vergrößerte perspektivische Ansicht eines vorderen Endabschnitts des Lasttragteils aus Fig. 19;
- Figur 21:: zeigt eine perspektivische Ansicht eines mit dem Lasttragteil verbindbaren Schwanenhalses des Tiefladers;
- Figur 22:: zeigt eine perspektivische Ansicht einer alternativ mit dem Lasttragteil verbindbaren Zuggabel;
- Figur 23:: zeigt eine perspektivische Ansicht eines Lasttragteils eines Transportfahrzeugs mit verstellbarer Breite und Spurweite bei seiner schmalsten Breiten- und Spurweiten-Einstellung gemäß einem zweiten Ausführungsbeispiel;
- Figur 24:: zeigt eine perspektivische Ansicht des Lasttragteils der Figur 23 bei seiner breitesten Breiten- und Spurweiten-Einstellung;
- Figur 25:: zeigt eine Vorderansicht des Lasttragteils gemäß der Figuren 23 und 24;
- Figur 26:: zeigt eine Draufsicht auf das Lasttragteil des zweiten Ausführungsbeispiels;
- Figur 27:: zeigt eine Seitenansicht des Lasttragteils des zweiten Ausführungsbeispiels.

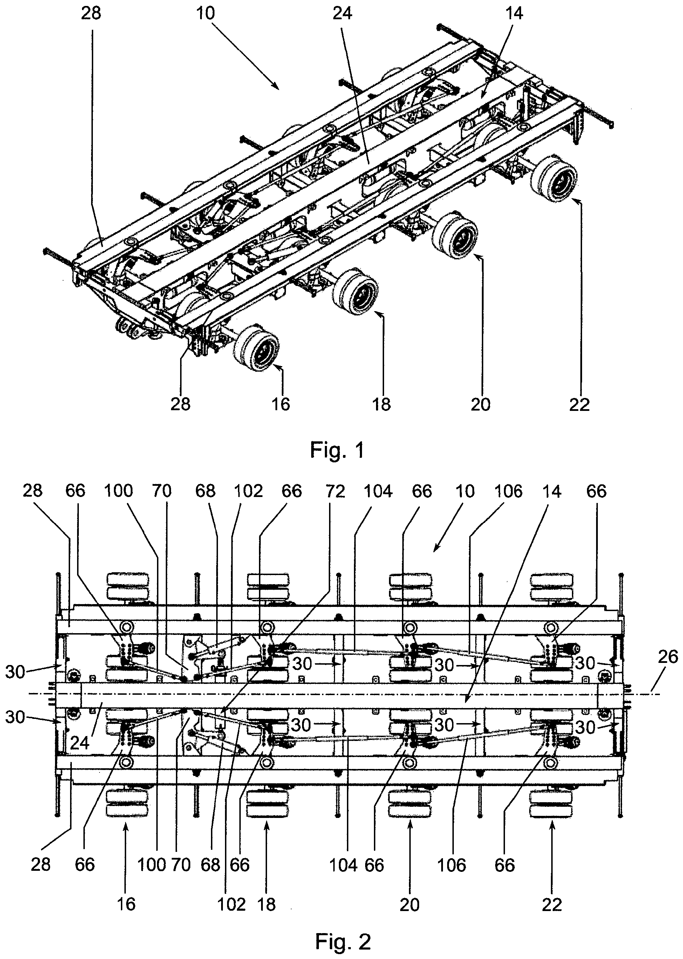

Bei dem in den Figuren 1 bis 22 dargestellten ersten Ausführungsbeispiel eines, zum Transport von Schwerlasten mit Überbreite, wie Maschinengehäusen oder Turmsegmenten von Windkraftanlagen bestimmten Transportfahrzeugs, hier eines Tiefladers, kann die Breite und die Spurweite verstellt werden, wodurch unter anderem die gesetzlichen Bestimmungen für Schwerlastfahrzeuge mit Überbreite in einigen Bundesstaaten der USA erfüllt und die maximal mögliche Achslast ausgenutzt werden können.

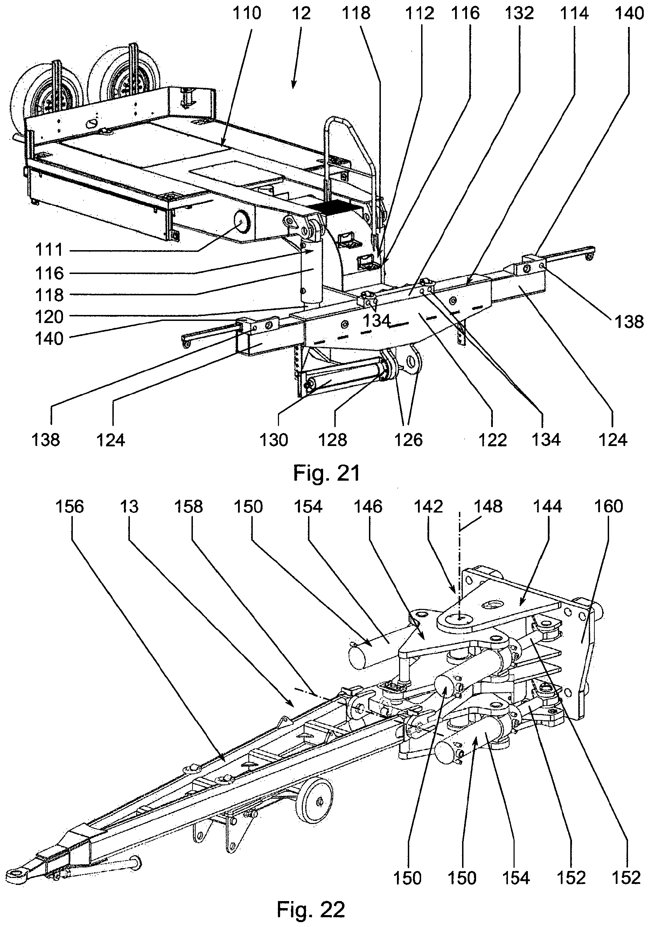

Der Tieflader umfasst einen in den Figuren 1 bis 3, 6 bis 8, 11 bis 13 und 16 bis 20 in verschiedenen Breiten- und Spurweiten-Einstellungen dargestellten Lasttragteil 10 und entweder einen in Fig. 21 dargestellten Schwanenhals 12 oder eine in Fig. 22 dargestellte Zugdeichsel 13, die alternativ an einem vorderen Ende des Lasttragteils 10 angebracht werden können und dazu dienen, den Lasttragteil 10 mit einer Zugmaschine (nicht dargestellt) zu koppeln.

In Abhängigkeit vom Gewicht und von der Länge der zu transportierenden Schwerlast kann der Tieflader neben dem dargestellten Lasttragteil 10 mindestens einen weiteren Lasttragteil mit variabler Breite und Spurweite umfassen, der mit dem hinteren Ende des dargestellten Lasttragteils 10 gekoppelt wird. Der weitere Lasttragteil besitzt einen im Wesentlichen identischen Aufbau wie der dargestellte Lasttragteil 10, kann jedoch eine andere Anzahl von Achsen und eine geringere Länge oder eine größere Länge aufweisen.

Wie am besten in den Figuren 1 und 2, 6 und 7, 11 und 12 sowie 19 dargestellt, besteht der Lasttragteil 10 im Wesentlichen aus einem Fahrgestell 14 und vier Lenkachsen 16, 18, 20, 22.

Das Fahrgestell 14 umfasst einen als Kastenträger ausgebildeten mittleren Längsträger 24, der sich entlang von einer vertikalen Längsmittelebene 26 des Lasttragteils 10 erstreckt, zwei seitliche Längsträger 28, die parallel zur Längsmittelebene 26 ausgerichtet und beiderseits des mittleren Längsträgers 24 angeordnet sind, sowie Querträger 30, die paarweise miteinander fluchten, den mittleren Längsträger 24 mit den seitlichen Längsträgern 28 verbinden und senkrecht zur vertikalen Längsmittelebene 26 ausgerichtet sind, wobei jeweils fünf Querträger 30 zwischen jedem der seitlichen Längsträger 28 und dem mittleren Längsträger 24 angeordnet sind.

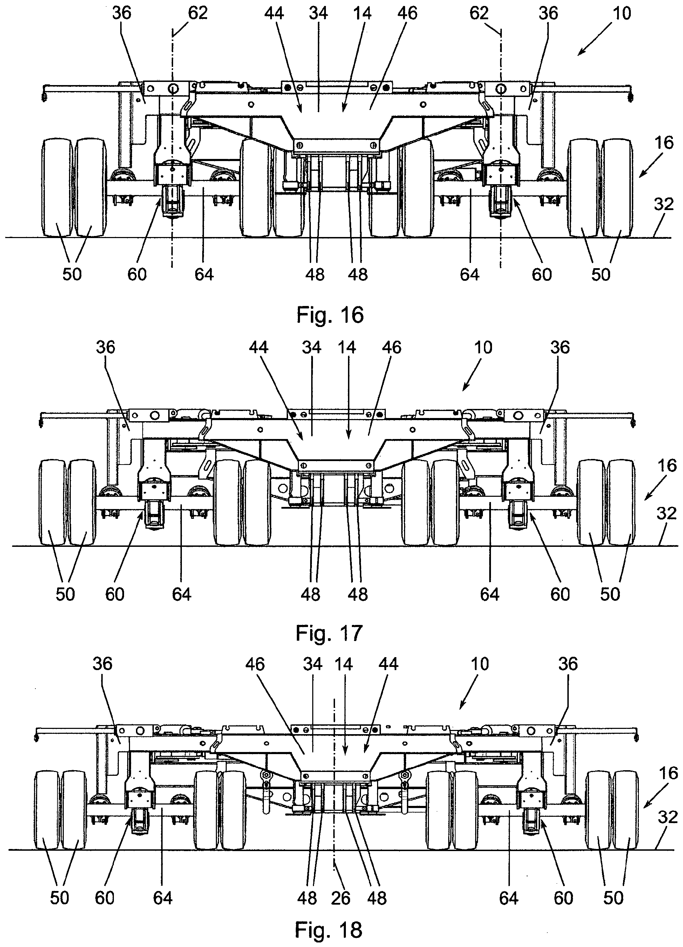

Wie am besten in den Figuren 16 bis 18 dargestellt, fluchten die ebenen Oberseiten der drei Längsträger 24, 28 miteinander und bilden eine zum Untergrund 32 parallele Lastauflagefläche für die zu transportierende Schwerlast.

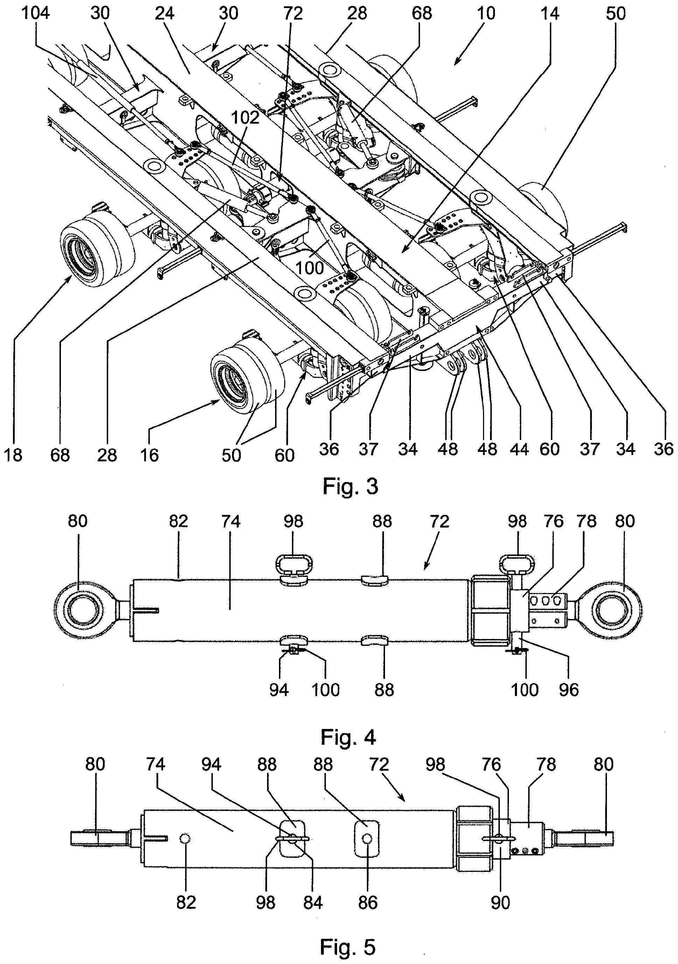

Wie in den Figuren 3, 8 und 13 am Beispiel des vordersten Querträgers dargestellt, sind die Querträger 30 teleskopierbar und umfassen jeweils zwei ineinander geschobene Hohlprofile 34, 36 mit Rechteckquerschnitt, von denen jeweils das äußere Hohlprofil 34 starr mit dem mittleren Längsträger 24 verbunden ist, während das im Inneren des äußeren Hohlprofils 34 verschiebbare innere Hohlprofil 36 starr mit einem der seitlichen Längsträger 28 verbunden ist.

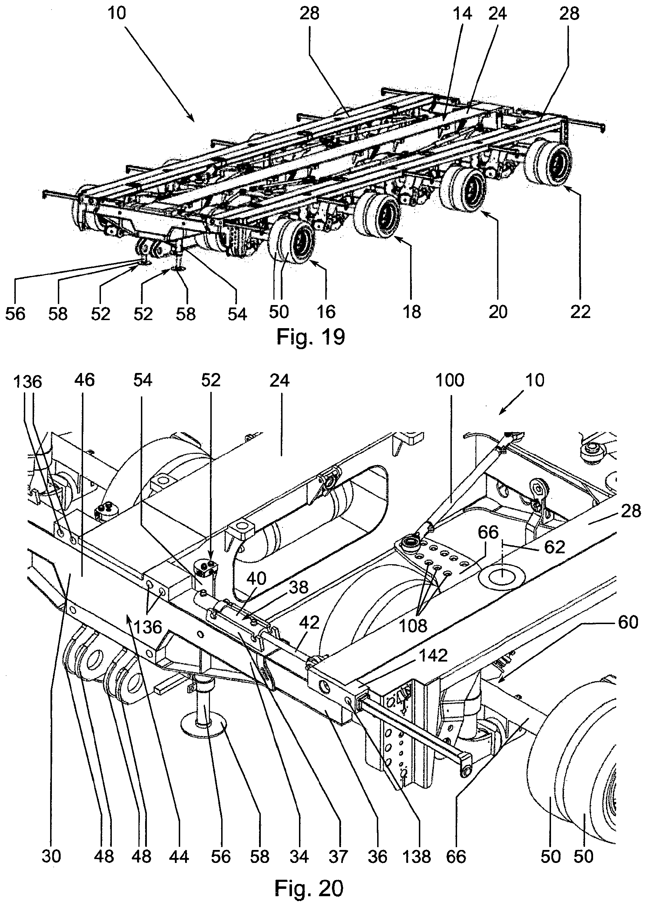

Oberhalb von jedem der vier an den entgegengesetzten Enden des Lasttragteils 10 angeordneten Querträgern 30 befindet sich eine Halterung 37 für einen mobilen Hydraulikzylinder 38, dessen Zylinderohr 40 von oben axial unverschiebbar in die Halterung 37 eingesetzt werden kann, um es dadurch lösbar mit dem äußeren Hohlprofil 34 und damit mit dem mittleren Längsträger 24 zu verbinden, während seine Kolbenstange 42 durch einen Bolzen lösbar mit dem inneren Hohlprofil 36 und damit einem der beiden seitlichen Längsträger 28 verbindbar ist, wie am besten in Fig. 20 dargestellt. Insgesamt sind zwei mobile Hydraulikzylinder 38 vorgesehen, von denen jeder an einem Ende des Lasttragteils 10 abwechselnd in die eine oder die andere Halterung 37 eingesetzt werden kann. Die beiden Hydraulikzylinder 38 lassen sich durch Schnellkupplungen mit einem Hydraulikkreislauf des Tiefladers verbinden und können durch ein steuerbares Hydraulikventil (nicht dargestellt) einzeln oder synchron aus- bzw. eingefahren werden, um den Tieflader nach einer Seite zu breiter bzw. schmaler zu machen.

Die äußeren Hohlprofile 34 des vordersten und des hintersten Querträgers 30 des Lasttragteils 10 sind jeweils zu einem hohlen Kastenträger vereint, der ein Kupplungselement 44 zum Kuppeln des Lasttragteils 10 mit dem Schwanenhals 12 oder mit der Zugdeichsel 13 bzw. mit einem weiteren Lasttragteil bildet. Der Kastenträger wird von einer vertikalen Stirnfläche 46 begrenzt und ist an seiner Unterseite mit mindestens zwei Augen 48 versehen.

Zur Veränderung der Breite und der Spurweite des Lasttragteils 10 werden die zwei mobilen Hydraulikzylinder 38 zuerst von oben her in die beiden Halterungen 37 auf einer Seite des mittleren Längsträgers 24 eingesetzt, um zuerst einen der seitlichen Längsträger 28 zu verschieben. Nach dem Verbolzen mit dem inneren Hohlprofil 36 werden die Kolbenstangen 42 der beiden Hydraulikzylinder 38 ein- bzw. ausgefahren, um den seitlichen Abstand zwischen dem mittleren Längsträger 24 und dem einen seitlichen Längsträger 28 unter Teleskopieren der zugehörigen Querträger 30 nach Bedarf zu vergrößern oder zu verkleinern. Anschließend werden die beiden Hydraulikzylinder 38 umgesetzt und der seitliche Abstand zwischen dem mittleren Längsträger 24 und dem anderen seitlichen Längsträger 28 um ein entsprechendes Maß vergrößert oder verkleinert.

Das äußere und das innere Hohlprofil 34, 36 der Querträger 30 lassen sich in Bezug zueinander in drei diskreten Stellungen arretieren, in denen die Breite des Tiefladers etwa 4800 mm (189 Inch), 5500 mm (126 Inch) oder 6100 mm (240 Inch) und die Spurweite etwa 2665 mm (104,92 Inch), 3351 mm (131,93 Inch) bzw. 3960 mm (155,94 Inch) beträgt.

Um zu verhindern, dass infolge von Reibkräften zwischen den auf dem Untergrund stehenden, mit dem Gewicht des Lasttragteils belasteten Rädern 50 und dem Untergrund 32 der Verschiebung der seitlichen Längsträger 28 ein großer Widerstand entgegengesetzt wird, wird das Fahrgestell 14 vor dem Verschieben derselben angehoben, wie in Fig. 19 und 20 dargestellt. Zu diesem Zweck ist das Lasttragteil 10 in der Nähe seines vorderen Endes und in der Nähe seines hinteren Endes jeweils mit zwei vertikalen Hydraulik-Stützen 52 versehen, die beiderseits des mittleren Längsträgers 24 in einer Ecke zwischen diesem und dem äußeren Hohlprofil 34 eines Querträgers 30 angeordnet sind. Jede Hydraulik-Stütze 52 umfasst ein starr mit dem Fahrgestell 14 verbundenes Zylinderrohr 54 und eine Kolbenstange 56, deren unteres Ende mit einer erweiterten Fußplatte 58 versehen ist. Wenn die Kolbenstangen 56 der vier Hydraulik-Stützen 52 nach unten aus den Zylinderrohren 54 ausgefahren werden, stützen sich zuerst die Fußplatten 58 auf dem Untergrund 32 ab, bevor dann die Zylinderrohre 54 zusammen mit dem gesamten Fahrgestell 14 angehoben werden, bis die Räder 50 nicht mehr mit dem Untergrund 32 in Berührung stehen, wie in Fig. 19 und 20 dargestellt. In diesem Zustand werden die Kolbenstangen 42 der Hydraulikzylinder 38 oberhalb der vorderen und hinteren Querträger 30 ein- bzw. ausgefahren, um die beiden seitlichen Längsträger 28 an den mittleren Längsträger 24 anzunähern oder von diesem weg zu bewegen. Danach werden die Kolbenstangen 56 der Hydraulik-Stützen 52 wieder eingefahren, um das Fahrgestell 14 wieder auf den Rädern 50 abzusetzen.

Die Lenkachsen 16, 18, 20, 22 bestehen jeweils aus zwei Rad-Drehgestellen 60, die jeweils nebeneinander an einem der beiden seitlichen Längsträger 28 angebracht und in Bezug zu diesem Längsträger 28 um eine zum Untergrund 32 senkrechte Drehachse 62 drehbar sind, wie in Fig. 16 dargestellt. Die in einer Reihe hintereinander unter jedem der seitlichen Längsträger 28 angeordneten Rad-Drehgestelle 60 tragen jeweils eine Halbachse, 64 an deren entgegengesetzten Enden zwei Paare von Rädern 50 montiert sind. Die Rad-Drehgestelle 60 umfassen jeweils einen Lenkhebel 66 einer Lenkung des Tiefladers, der drehfest mit der Halbachse 64 verbunden ist und zum Einschlagen der Räder der Halbachse 64 um die Drehachse 62 des Rad-Drehgestells 60 verschwenkt werden kann.

Zum Verschwenken der Rad-Drehgestelle 60 dienen zwei Lenkzylinder 68, die mit einem Hydraulik-Lenkkreislauf der Lenkung des Tiefladers verbunden sind. Das Zylinderrohr jedes Lenkzylinders 68 ist jeweils in der Nähe der zweiten Lenkachse 18 an einem der beiden seitlichen Längsträger 28 angelenkt, während die Kolbenstange auf einen zusätzlichen Lenkhebel 70 einwirkt, der etwa in der Mitte zwischen der ersten und der zweiten Lenkachse 16, 18 an demselben seitlichen Längsträger 28 angelenkt ist, wie am besten in den Figuren 2, 7 und 12 dargestellt.

Die Lenkhebel 70 sind durch eine quer zur Längsmittelebene 26 ausgerichtete Querspurstange 72 miteinander verbunden, deren Enden an überstehenden Vorsprüngen der beiden Lenkhebel 70 angelenkt sind. Die Querspurstange 72 gewährleistet, dass beim Lenken die beiden Rad-Drehgestelle 60 jeder Lenkachse 16, 18, 20, 22 in Bezug zu einem gemeinsamen Lenkpol um korrekte Lenkwinkel gedreht und damit die Räder 50 der beiden Halbachsen 64 jeder Lenkachse 16, 18, 20, 22 mit zum Lenkpol korrekten Einschlagwinkeln eingeschlagen werden.

Da die Querspurstange 72 die beiden Lenkhebel 70 verbindet, die wiederum an den seitlichen Längsträgern 28 angelenkt sind, verändert sich der Abstand zwischen den Anlenkpunkten der Enden der Querspurstange 72, wenn die beiden seitliche Längsträger 28 zur Veränderung der Breite und der Spurweite des Tiefladers an den mittleren Längsträger 24 angenähert oder von diesem weg bewegt werden.

Um diese Veränderung des Abstands ausgleichen zu können, ist die Querspurstange 72 teleskopierbar ausgebildet. Wie am besten in den Figuren 4 und 5, 9 und 10, sowie 14 und 15 dargestellt, besteht die Querspurstange 72 aus drei langgestreckten koaxialen Zylinderrohren 74, 76, 78 mit unterschiedlichen Durchmessern, die sich ineinander schieben bzw. auseinander ziehen lassen und in Bezug zueinander in drei vorgegebenen Verschiebestellungen fixierbar sind, die den drei verschiedenen einstellbaren Breiten bzw. Spurweiten des Tiefladers entsprechen. Die drei Zylinderrohre 74, 76, 78 weisen ungefähr dieselbe Länge auf.

An ihren entgegengesetzten Enden ist die Querspurstange 72 mit zwei Augen 80 versehen, die zum Anlenken der Querspurstange 72 am Vorsprung des jeweiligen Lenkhebels 70 dienen, wobei das eine Auge 80 am äußeren Zylinderrohr 74 und das andere Auge 80 am inneren Zylinderrohr 78 befestigt ist.

Zum Fixieren der drei Zylinderrohre 74, 76, 78 in den drei vorgegebenen Verschiebestellungen ist das äußere Zylinderrohr 74 mit drei fluchtenden diametralen Querbohrungen 82, 84, 86 versehen, wobei die entgegengesetzten Mündungen von zwei 84, 86 der Bohrungen 82, 84, 86 jeweils durch eine aufgeschweißte Lochplatte 88 verstärkt sind. Das mittlere und das innere Zylinderrohr 76, 78 weisen jeweils zwei fluchtende diametrale Querbohrungen 90, 92, die nur teilweise sichtbar sind.

In den vorgegebenen Verschiebestellungen können Arretierbolzen 94, 96 durch einen Teil der Querbohrungen 82, 84, 86, 90, 92 hindurch gesteckt und gesichert werden, um die Zylinderrohre 74, 76, 78 axial unverschiebbar zu fixieren bzw. zu arretieren. Zu diesem Zweck sind insgesamt zwei Arretierbolzen 94, 96 ausreichend. Die Arretierbolzen 94, 96 sind an einem Ende mit einem erweiterten Griffteil 98 und am anderen Ende mit einem lösbaren Sicherungsstift 100 versehen.

Wenn der Tieflader die schmalste Breite und Spurweite aufweist, wie in den Figuren 1 bis 3 dargestellt, sind sämtliche drei Zylinderrohre 74, 76, 78 der Querspurstange 72 ganz ineinander geschoben, wie in Fig. 4 und 5 dargestellt. In diesem Zustand durchsetzt einer 94 der beiden Arretierbolzen 94, 96 die mittlere 84 der drei diametralen Querbohrungen 82, 84, 86 des äußeren Zylinderrohrs 74 sowie jeweils eine mit dieser Querbohrung 84 fluchtende diametrale Querbohrung (nicht sichtbar) des mittleren und des inneren Zylinderrohrs 76, 78. Der zweite Arretierbolzen 96 durchsetzt zwei fluchtende diametrale Querbohrungen, die in den aus dem äußersten Zylinderrohr 74 überstehenden Enden des mittleren und des inneren Zylinderrohr 76, 78 vorgesehen sind, wobei nur die Querbohrung 90 im mittleren Zylinderrohr 76 sichtbar ist.

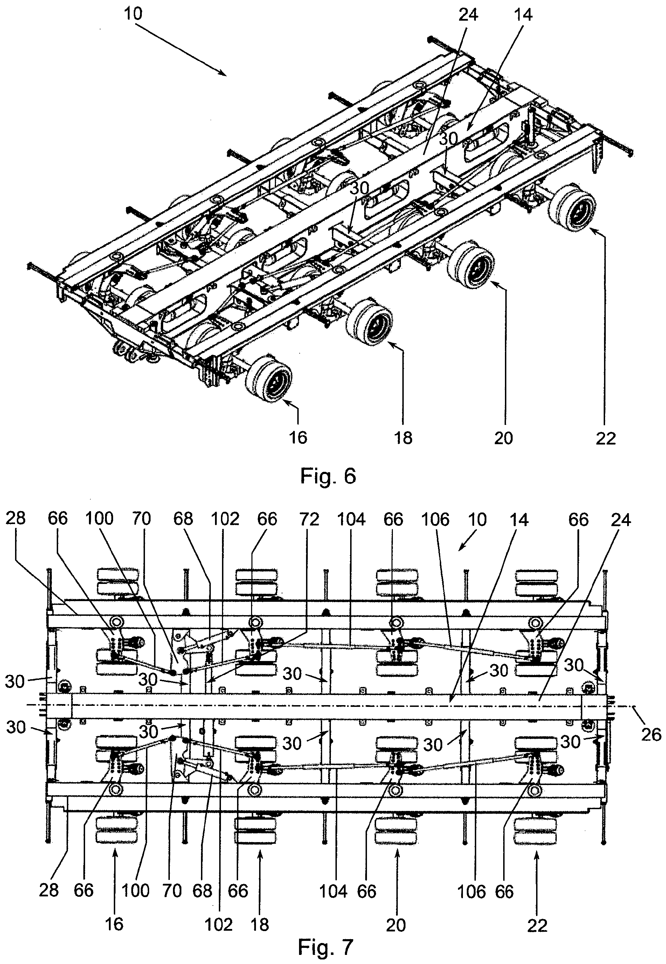

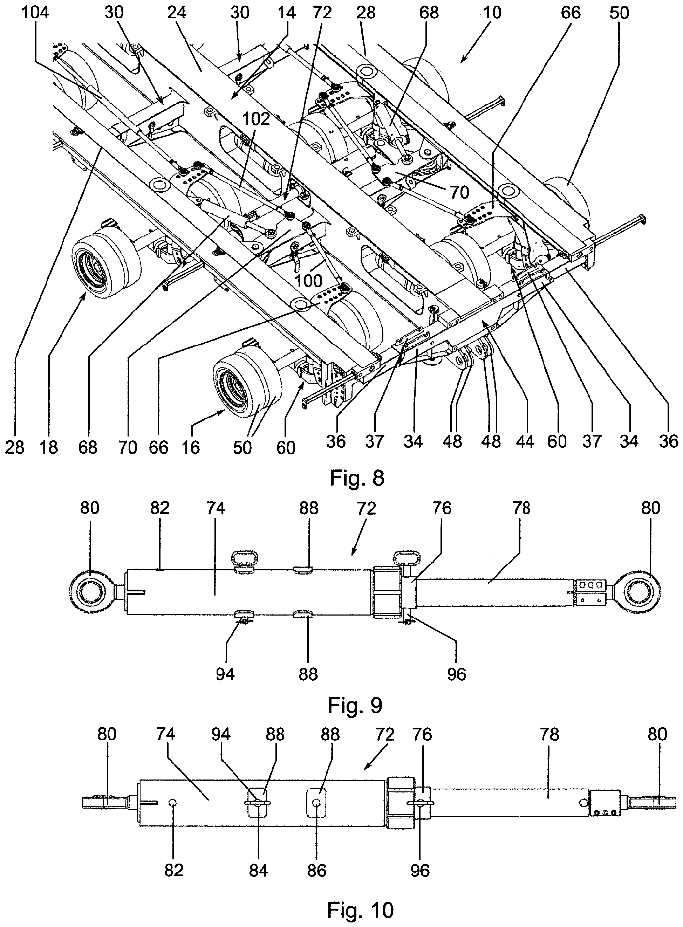

Wenn der Tieflader die mittlere Breite und Spurweite aufweist, wie in den Figuren 6 bis 8 dargestellt, bleibt das mittlere Zylinderrohr 76 der Querspurstange 72 ganz in das äußere Zylinderrohr 74 eingeschoben, während das innere Zylinderrohr 78 ganz aus dem mittleren 76 Zylinderrohr herausgezogen ist, wie in Fig. 9 und 10 dargestellt. In diesem Zustand durchsetzt der erste Arretierbolzen 94 die mittlere 84 der drei diametralen Querbohrungen 82, 84, 86 des äußeren Zylinderrohrs 74 und eine mit dieser Querbohrung 84 fluchtende diametrale Querbohrung (nicht sichtbar) des mittleren Zylinderrohrs 76. Das herausgezogene innere Zylinderrohr 78 wird vom zweiten Arretierbolzen 96 festgehalten, der in diesem Zustand die Querbohrung 90 am Ende des mittleren Zylinderrohrs 76 und diejenige diametrale Querbohrung des inneren Zylinderrohrs 78 durchsetzt, die bei ganz eingeschobenem innerem Zylinderrohr 78 mit der Querbohrung 84 ausgerichtet war.

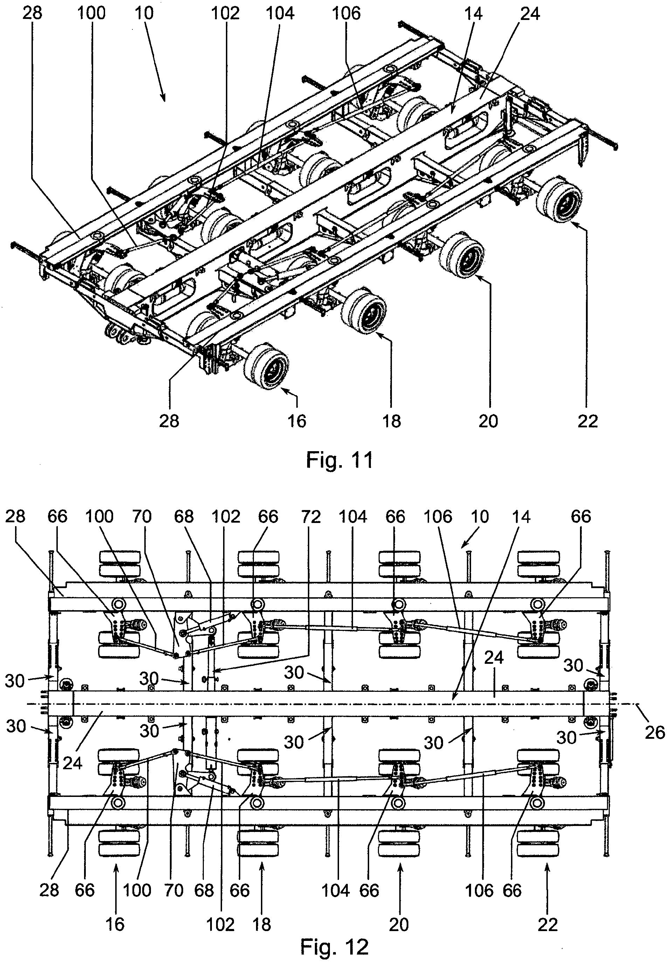

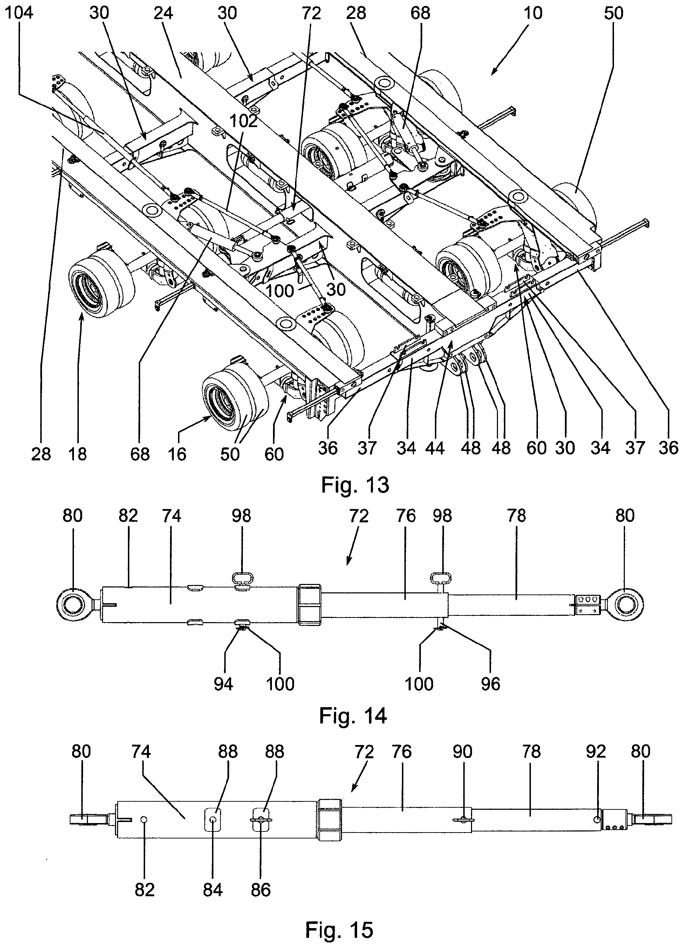

Wenn der Tieflader die größte Breite und Spurweite aufweist, wie in den Figuren 11 bis 13 dargestellt, ist nicht nur das innere Zylinderrohr 78 ganz aus dem mittleren Zylinderrohr 76 sondern auch das mittlere Zylinderrohr 76 ganz aus dem äußeren Zylinderrohr 74 heraus gezogen, wie in Fig. 14 und 15 dargestellt. In diesem Zustand durchsetzt der erste Arretierbolzen 84 die vom Auge 80 abgewandte diametrale Querbohrung 86 des äußeren Zylinderrohrs 74 und erstreckt sich am hinteren Stirnende des mittleren Zylinderrohrs 76 entlang, so dass dieses nicht wieder in das äußere Zylinderrohr 74 geschoben werden kann. Das innere Zylinderrohr 78 ist aus dem mittleren Zylinderrohr 76 heraus gezogen und wird wie zuvor vom zweiten Arretierbolzen 96 gehalten, der die Querbohrung 90 am Ende des mittleren Zylinderrohrs 76 und die Querbohrung (nicht sichtbar) des inneren Zylinderohrs 78 durchsetzt.

Um zu verhindern, dass sich das mittlere Zylinderohr 76 in Bezug zum äußeren oder inneren Zylinderrohr 74 bzw. 78 um seine Längsachse verdrehen kann, ist es zum Beispiel durch eine formschlüssig Keilverbindung verschiebbar und drehfest mit dem äußeren und dem inneren Zylinderrohr 74, 78 verbunden. Ein Verdrehen des äußeren und des inneren Zylinderrohrs 74, 78 wird durch die beiden Augen 80 verhindert.

Wie am besten in den Figuren 2, 3, 7, 8, 12 und 13 dargestellt, ist jeder der beiden Lenkhebel 72, die durch die Querspurstange 72 verbunden sind, durch jeweils eine Längsspurstange 100, 102 mit dem Lenkhebel 66 eines benachbarten Rad-Drehgestells 60 der ersten bzw. der zweiten Lenkachse 16, 18 verbunden.

Die Lenkhebel 66 der beiden Rad-Drehgestelle 60 der dritten Lenkachse 20 sind jeweils durch eine Längsspurstange 104, 106 mit dem Lenkhebel 66 eines benachbarten Rad-Drehgestells 60 der zweiten bzw. vierten Lenkachse 18, 22 verbunden.

Wie am besten in Fig. 20 am Beispiel eines Lenkhebels 66 der ersten Lenkachse 16 dargestellt, sind die Lenkhebel 66 der Rad-Drehgestelle 60 sämtlicher Lenkachsen 16, 18, 20, 22 jeweils mit zehn Löchern 108 versehen, die in unterschiedlichen Abständen von der vertikalen Drehachse 62 des jeweiligen Rad-Drehgestells 60 angeordnet sind. Auf diese Weise können die Längsspurstangen 100, 102, 104, 106 unter Verwendung von unterschiedlichen Löchern 108 an den Lenkhebeln 66 der ersten, zweiten, dritten und vierten Lenkachse 16, 18, 20, 22 angelenkt und dadurch für die beiden Rad-Drehgestelle 60 jeder Lenkachse 16, 18, 20, 22 eine gewünschte Lenkübersetzung ausgewählt werden, die sich von den Lenkübersetzungen der anderen Lenkachsen 16, 18, 20, 22 unterscheidet.

Der in Fig. 21 dargestellte Schwanenhals 12 kann am vorderen Ende des Lasttragteils 10 befestigt werden und umfasst einen allgemein horizontal ausgerichteten vorderen Auflageteil 110 zum Auflegen auf den flachen hinteren Teil der Zugmaschine, einen am hinteren Ende des Auflageteils 110 nach unten ragenden Halsteil 112, der in Bezug zum Auflageteil 110 um eine senkrecht zur Längsmittelebene 26 ausgerichtete Schwenkachse 111 schwenkbar ist, sowie einen am unteren Ende des Halsteils 112 angebrachten Kupplungsteil 114, der senkrecht zur vertikalen Längsmittelebene 26 des Lasttragteils 10 teleskopierbar ist.

Der Auflageteil 110 ist an seiner Unterseite mit einem Drehkupplungselement (nicht sichtbar) versehen, das sich in bekannter Weise mit einem komplementären Drehkupplungselement der Zugmaschine kuppeln lässt, so dass der Schwanenhals 12 in Bezug zur Zugmaschine um eine zum Untergrund 32 senkrechte Achse drehbar ist.

Der Halsteil 112 umfasst zwei vertikale Hydraulikzylinder 116, deren Zylinderrohre 118 in einem Abstand von der Schwenkachse 111 am hinteren Ende des Auflageteils 110 angelenkt sind, während ihre Kolbenstangen 120 in einem größeren Abstand von der Schwenkachse 111 am unteren Ende des Halsteils angelenkt sind. Durch Ein- bzw. Ausfahren der Kolbenstangen 120 kann der Halsteil 112 in Bezug zum Auflageteil 110 um die Schwenkachse 111 verschwenkt werden, um beim Kuppeln mit dem Lasttragteil 10 die Höhe des Kupplungsteils 114 über dem Untergrund 32 an die Höhe des Kupplungselements 44 am gegenüberliegenden vorderen Ende des Lasttragteils 10 anzupassen.

Der breitenverstellbare Kupplungsteil 114 umfasst einen hohlen Mittelteil 122, der sich starr mit dem Kupplungselement 44 am vorderen Ende des Lasttragteils 10 kuppeln lässt, sowie zwei Seitenteile 124, die sich quer zur Fahrtrichtung bzw. zur Längsmittelebene 26 aus dem hohlen Mittelteil 122 ausfahren und starr mit benachbarten inneren Hohlprofil 36 der beiden Querträger 30 am vorderen Ende des Lasttragteils 10 verbinden lassen, um die Verwindungssteifigkeit zu vergrößern.

Der Mittelteil 122 besteht im Wesentlichen aus einem quer zur Fahrtrichtung ausgerichteten Kastenträger, in dem die beiden Seitenteile 124 verschiebbar und ausziehbar geführt sind, sowie zwei an der Unterseite des Kastenträgers angebrachte Augen 126. Der seitliche Abstand der Augen 126 entspricht dem Mittenabstand der Paare von Augen 48 des Kupplungselements 44 am vorderen Ende des Lasttragteils 10, so dass sich die Augen 126 jeweils zwischen zwei Augen 48 jedes Augenpaars einführen und mittels eines axial verschiebbaren Kupplungsbolzens 128 mit den Augen 48 kuppeln lassen. Der Kupplungsbolzen 128 wird vom freien Ende einer Kolbenstange eines in Verlängerung der Mittelachsen der Augen 126 angebrachten Hydraulikzylinders 130 gebildet.

An der Oberseite des Mittelteils 122 ist eine Leiste 132 angeschweißt, durch die sich in Fahrtrichtung ausgerichtete Bohrungen 134 erstrecken. Nach dem Kuppeln der Augen 48, 126 mittels des Kupplungsbolzens 128 können durch diese Bohrungen 134 sowie durch fluchtende Bohrungen 136 des Kupplungselements 44 (Fig. 20) Verbindungsschrauben gesteckt und gekontert werden, um den Mittelteil 122 mit dem Kupplungselement 44 zu verschrauben. Entsprechende Bohrungen 138 sind in einem Klotz 140 an der Oberseite der Seitenteile 124 und in einem Klotz 142 auf der Oberseite der inneren Hohlprofile 36 der Querträger 30 an den Enden des Lasttragteils 10 vorgesehen, so dass diese ebenfalls durch Verbindungsschrauben verschraubt werden können, wenn die Bohrungen 138 miteinander fluchten.

Nach dem Kuppeln des Schwanenhalses 12 mit dem Lasttragteil 10 werden die beiden Hydraulikzylinder 116 hydraulisch mit Hydraulikzylindern (nicht dargestellt) eines Teils der Rad-Drehgestelle 60 verbunden, um auf diese Weise Hubbewegungen des Fahrgestells 14 und hydraulische Kräfte der Hydraulikzylinder der Rad-Drehgestelle 60 auf die beiden Hydraulikzylinder 116 zu übertragen. Dadurch drückt das Drehkupplungselement an der Unterseite des Auflageteils 110 immer mit einer definierten Kraft auf das Drehkupplungselement der Zugmaschine und überträgt somit eine konstante Kraft auf die Zugmaschine.

An Stelle des Schwanenhalses 12 in Fig. 21 kann auch die in Fig. 22 dargestellte Zugdeichsel 13 mit dem Lasttragteil 10 gekuppelt werden. Zu diesem Zweck umfasst die Zugdeichsel 13 an ihrem von der Zugmaschine abgewandten Ende einen Kupplungsteil 142, der starr mit dem Kupplungselement 44 des Lastragteils 10 verbindbar ist, der jedoch anders als der Kupplungsteil 114 des Schwanenhalses 12 nicht teleskopierbar ist.

Der Kupplungsteil 142 umfasst zwei Elemente 144, 146, die in Bezug zueinander um eine vertikale Schwenkachse 148 schwenkbar sind, sowie vier Hydraulikzylinder 150, die beiderseits der Längsmittelebene 26 paarweise zwischen den Elementen 146, 148 angeordnet sind. Die Hydraulikzylinder 150 weisen jeweils eine am Element 144 angelenkte Kolbenstange 152 und ein am Element 146 angelenktes Zylinderrohr 154 auf. Das Element 144 ist in Bezug zu einem Deichselteil 156 der Zugdeichsel 13 um eine zum Untergrund parallele Achse 158 schwenkbar. Das Element 146 umfasst eine vertikale Platte 160, die sich mit der Stirnfläche 46 des Kupplungselements 44 des Lasttragteils 10 zur Anlage bringen und durch Verschrauben mit dem Kupplungselement 44 kuppeln lässt. Nach dem Kuppeln werden die Hydraulikzylinder 150 hydraulisch mit einem Hydraulik-Lenkkreislauf der Lenkachsen 16, 18, 20, 22 verbunden, um auf diese Weise auch zwischen den Elementen 144 und 146 für einen gewünschten Einschlagwinkel zu sorgen.

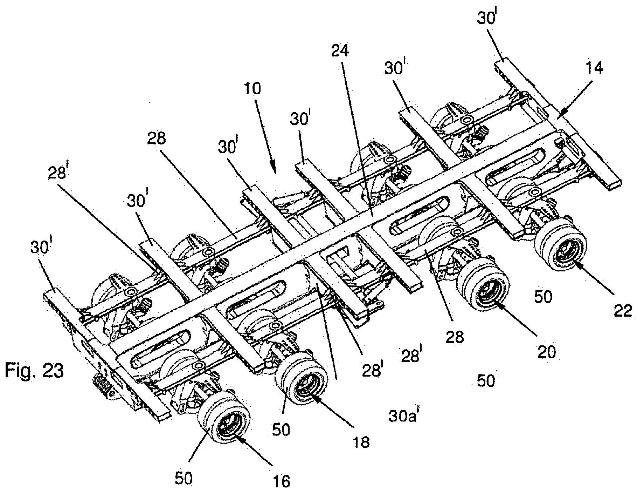

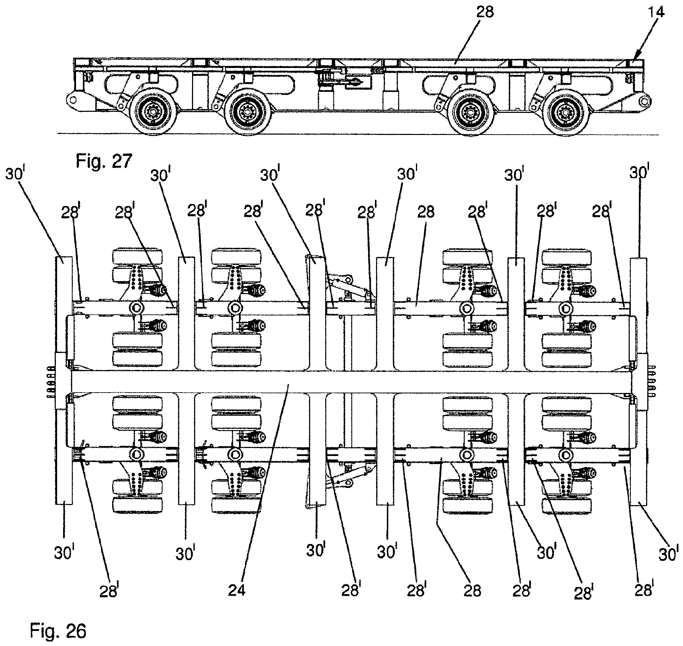

In den Figuren 23 bis 27 ist ein zweites Ausführungsbeispiel eines Lasttragteils 10' eines Transportfahrzeugs wie eines Tiefladers mit verstellbarer Breite und Spurweite dargestellt, dass seinem Grundaufbau nach demjenigen des ersten Ausführungsbeispiels entspricht, so dass korrespondierende Bauteile mit den gleichen Bezugszeichen versehen und nicht mehr erneut beschrieben werden. Der dem Lasttragteil 10 des ersten Ausführungsbeispiels entsprechende Lasttragteil 10' des zweiten Ausführungsbeispiels weist somit wiederum ein Fahrgestell 14 mit vier Lenkachsen 16, 18, 20, 22 auf. Auch hier umfasst das Fahrgestell 14 einen als Kastenträger ausgebildeten mittleren Längsträger 24, der sich entlang einer vertikalen Längsmittelebene 26 des Lasttragteils erstreckt, zwei seitliche Längsträger 28, die parallel zur Längsmittelebene 26 ausgerichtet und beiderseits des mittleren Längsträgers 24 angeordnet sind, sowie sechs Querträger 30', die paarweise miteinander fluchten, den mittleren Längsträger 24 mit den seitlichen Längsträgern 28 verbinden und senkrecht zur vertikalen Längsmittelebene 26 ausgerichtet sind, wobei jeweils sechs Querträger 30' zwischen jedem der seitlichen Längsträger 28 und der mittleren Längsträger 24 angeordnet sind.

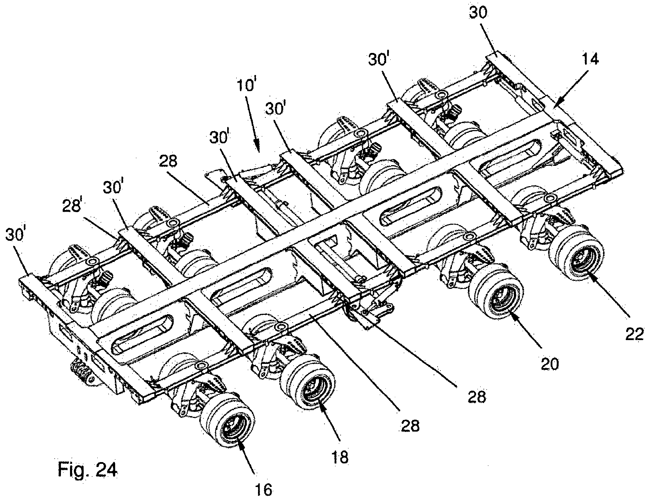

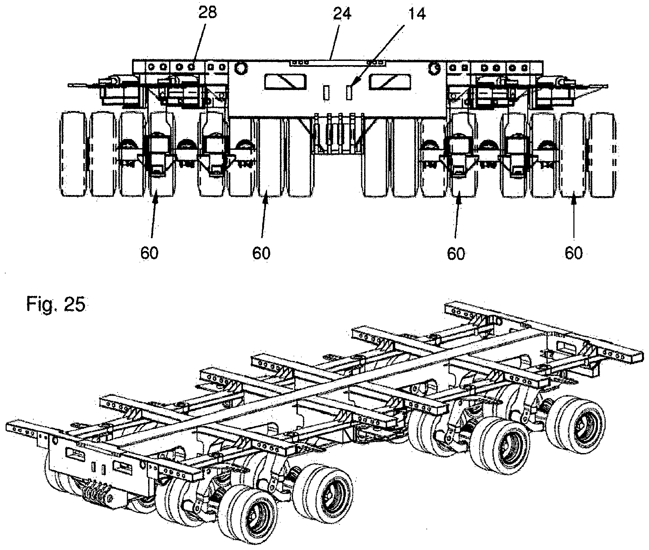

Wie bereits vorstehend beschrieben, sind beim ersten Ausführungsbeispiel die den Querträgern 30' des zweiten Ausführungsbeispiels entsprechenden Querträger 30 teleskopierbar ausgebildet und umfassen jeweils zwei ineinander geschobene Hohlprofile 34, 36 mit Rechtecksquerschnitt, von den jeweils das äußere Hohlprofil 34 starr mit dem mittleren Längsträger verbunden ist, während das im Inneren des äußeren Hohlprofils 34 des ersten Ausführungsbeispiels verschiebbare innere Hohlprofile 36 starr mit einem der seitlichen Längsträger 28 verbunden ist. Durch eine Verschiebung des inneren Hohlprofils 36 relativ zum äußeren Hohlprofil 34 ist somit der Abstand der beiden seitlichen Längsträger 28 und somit der Abstand der jeweils an einem der beiden seitlichen Längsträger angebrachten Rad-Drehgestelle 60 veränderbar. Beim zweiten Ausführungsbeispiel ist hingegen vorgesehen, dass die Querträger 30' nicht-teleskopierbar ausgebildet sind, also eine vorgegebene Länge besitzen. Um nun den Abstand der einander gegenüberliegenden Rad-Drehgestelle 60 der Lenkachsen 16, 18, 20, 22 und somit die Breite des Lasttragteils 10 verändern zu können, ist im zweiten Ausführungsbeispiel vorgesehen, dass die seitlichen Längsträger 28 entlang der Querträger 30' verschiebbar angeordnet sind. Wie aus den Figuren 23, 24 und 26 ersichtlich, weisen die seitlichen Längsträger 28 hierzu Verschiebeelemente 28' auf, die einerseits fest mit dem jeweiligen Längsträger 28 verbunden sind, andererseits verschiebbar in den Querträgern 30' geführt sind. Die Figur 23 zeigt nun das Lasttragteil 10' des zweiten Ausführungsbeispiels in einer Stellung, die der schmalsten Breiten- und Spurweiten-Einstellung des Lasttragteils 10' entspricht. Man erkennt, dass die Verschiebeelemente 28' an den beiden seitlichen Längsträgern 28 entfernter vom äußeren Ende der Querträger 30' befinden als dies in der Figur 24 der Fall ist, bei der der Lasttragteil 10' in seiner größten Breiten- und Spurweiten-Einstellung gezeigt ist. In der Vorderansicht der Figur 25 ist diese breiteste Stellung strichliert dargestellt.

Eine derartige Maßnahme besitzt den Vorteil, dass hierdurch in einfacher Art und Weise eine Breiten- und Spurverstellung des Lasttragteils 10' auch unter Last durchgeführt werden kann. Hierzu kann wieder vorgesehen sein, dass - wie anhand der Figuren 19 und 20 des ersten Ausführungsbeispiels beschrieben - das Lasttragteil 10' in der Nähe seines vorderen Endes und in der Nähe seines hinteren Endes jeweils mit zwei vertikalen Hydraulik-Stützen (nicht gezeigt) versehen seien. Da aber hier die Querträger 30' mit dem Längsträger 24 fest verbunden und nicht-teleskopierbar ausgebildet sind, ist es auch möglich, dass das Anheben des Fahrgestells 14 mittels an den Querträger 30' angeordneten, ihrer Funktion nach den Hydraulik-Stützen 52 entsprechenden Hydraulik-Stützen (nicht gezeigt) durchgeführt wird.

Es ist aber auch möglich, dass mittels externer Hubvorrichtungen die Querträger 30' unterstützt und derart das Fahrgestell 14 angehoben wird, bis die Räder 50 der Rad-Drehgestelle 60 nicht mehr mit dem Untergrund in Berührung stehen. Wird über die Querträger 30' das Fahrgestell 14 angehoben, so senken sich die beiden seitlichen Längsträger 28, welche die Rad-Drehgestelle 60 tragen, leicht ab und haben dadurch keine Berührung mehr mit der vom Lasttragteil 10' getragenen Ladung. Eine Breiten- und Spurverstellung der Rad-Drehgestelle 60 ist somit in einfacher Art und Weise möglich, was mit einer verminderten Rüstzeit und einem geringeren Arbeitsaufwand bei der Verstellung der Breite und Spurweite einhergeht.

Ein weiterer Vorteil der beschriebenen Vorgangsweise besteht darin, dass eine stabile und damit belastbare Verbindung zwischen dem mittleren Längsträger 24 und den Querträgern 30' ausgebildet werden kann, da die Querträger 30' nun nicht mehr zur Breiten- und Spurverstellung in ihrer Länge verändert werden müssen. Es ist somit möglich, dass - wie aus den Figuren 23 und 24 ersichtlich ist - bei jedem Querträger 30' ein Abstützelement 30a' vorgesehen ist, welches vom mittleren Längsträger 24 ausgehend die Querträger 30' abstützt. Da - wie wiederum am besten aus den Figur 23 und 24 ersichtlich - unter den Querträgern 30' nur so viel Bauraum vorhanden sein muss, dass die Räder 50 der Rad-Drehgestelle 60 der Längsachsen 16, 18, 20, 22 in ihrer schmalsten Stellung unter den Querträgern 30' anordbar sind, können diese Abstützelemente 30a' weit in Richtung der Querträger 30' ausladend ausgebildet werden.

Bei der vorstehenden Beschreibung wurde davon ausgegangen, dass der Lasttragteil 10 des ersten Ausführungsbeispiels teleskopierbare Querträger 30 und der Lasttragteil 10' des zweiten Ausführungsbeispiels nicht in ihrer Länge veränderliche Querträger 30' aufweist. Dem Fachmann ist aber klar ersichtlich, dass es durchaus auch möglich ist, diese beiden Maßnahmen zu kombinieren.

## Patentansprüche

1. Transportfahrzeug mit variabler Breite und Spurweite, einem Fahrgestell (14) und mindestens einer Lenkachse (16, 18, 20, 22), wobei das Fahrgestell (14) zwei Fahrgestellteile (28) umfasst, die jeweils eine Reihe von hintereinander angeordneten Rad-Drehgestellen (60) tragen und quer zu einer vertikalen Längsmittelebene (26) des Transportfahrzeugs verstellbar sind, **dadurch gekennzeichnet, dass** zwischen den beiden Reihen von Rad-Drehgestellen (60) nur eine einzige längenverstellbare Querspurstange (72) angeordnet ist, die zwei Rad-Drehgestelle (60) von der oder einer Lenkachsen (16, 18, 20, 22) verbindet und deren Länge um ein dem Maß der Vergrößerung oder Verkleinerung der Breite und Spurweite entsprechendes Maß verstellbar ist, dass diese Querspurstange (72) zwei Lenkhebel (70) verbindet, die jeweils zwischen zwei benachbarten Rad-Drehgestellen (60) dieser Lenkachse an einem der beiden Fahrgestellteile (28) angelenkt sind, und dass jeder der durch die Querspurstange (72) verbundenen Lenkhebel (70) durch eine Längsspurstangen (100, 102) mit einem Lenkhebel (66) eines benachbarten Rad-Drehgestells (60) in derselben Reihe verbunden ist.

2. Transportfahrzeug nach Anspruch 1, **dadurch gekennzeichnet, dass** mindestens ein Lenkhebel (66) eines Rad-Drehgestells (60) in jeder Reihe durch zwei Längsspurstangen (102, 104) mit Lenkhebeln (66) von zwei benachbarten Rad-Drehgestellen (60) in derselben Reihe verbunden ist.

3. Transportfahrzeug nach einem der vorangehenden Ansprüche, **dadurch gekennzeichnet, dass** die Querspurstange (72) teleskopierbar ist und mindestens zwei röhrenförmige Elemente (74, 76, 78) umfasst, die in Bezug zueinander in Richtung einer Längsachse der Querspurstange (72) verschiebbar und in vorgegebenen Verschiebestellungen fixierbar sind.

4. Transportfahrzeug nach einem der vorangehenden Ansprüche, **dadurch gekennzeichnet, dass** die Querspurstange (72) mindestens drei röhrenförmige Elemente (74, 76, 78) umfasst, die in Bezug zueinander in Richtung einer Längsachse der Querspurstange (72) verschiebbar und in vorgegebenen Verschiebestellungen fixierbar sind.

5. Transportfahrzeug nach Anspruch 3 oder 4, **dadurch gekennzeichnet, dass** die benachbarten röhrenförmigen Elemente (74, 76; 76, 78) jeweils nur in einer ganz eingeschobenen und einer ganz ausgezogenen Verschlebestellung in Bezug zueinander fixierbar sind.

6. Transportfahrzeug nach Anspruch 5, **dadurch gekennzeichnet, dass** eine Längendifferenz zwischen den Verschiebestellungen dem Maß der Veränderung der Spurbreite und Breite entspricht.

7. Transportfahrzeug nach einem der Ansprüche 3 bis 6, **dadurch gekennzeichnet, dass** die röhrenförmigen Elemente (74, 76, 78) mittels Arretierbolzen (94, 96) fixierbar sind, die sich durch fluchtende Querbohrungen (84, 86, 90) von mindestens zwei der röhrenförmigen Elemente (74, 76, 78) erstrecken.

8. Transportfahrzeug nach einem der vorangehenden Ansprüche, **gekennzeichnet durch** Mittel (52) zum Anheben des Fahrgestells (14) vor dem Verändern der Breite und Spurweite.

9. Transportfahrzeug nach Anspruch 8, **gekennzeichnet durch** mindestens einen mobilen Hydraulikzylinder (38) zum Bewegen der beiden Fahrgestellteile (28), wobei der mobile Hydraulikzylinder (38) abwechselnd zwischen einen mittleren Fahrgestellteil (24) und den einen bzw. den anderen der beiden Fahrgestellteile (28) einsetzbar ist.

10. Transportfahrzeug nach einem der vorangehenden Ansprüche, **dadurch gekennzeichnet, dass** das Fahrgestell (14) einen mittleren Längsträger (24) und mindestens einen, vorzugsweise zwei seitliche Längsträger (28) aufweist, deren Abstand zum mittleren Längsträger (24) veränderlich ist, und dass der mittlere Längsträger (24) und der oder die seitlichen Längsträger (28) durch Querträger (30; 30') miteinander verbunden sind.

11. Transportfahrzeug nach Anspruch 10, **dadurch gekennzeichnet, dass** mindestens ein Querträger (30) teleskopierbar ausgebildet ist.

12. Transportfahrzeug nach Anspruch 10 oder 11, **dadurch gekennzeichnet, dass** mindestens ein seitlicher Längsträger (28) verschiebbar an den Querträgern (30') angeordnet ist.

13. Transportfahrzeug nach einem der vorangehenden Ansprüche, **gekennzeichnet durch** einen Lasttragteil (10) und einen mit dem Lasttragteils (10) verbundenen Schwanenhals (12), dessen Breite entsprechend dem Maß der Vergrößerung oder Verkleinerung der Spurweite und Breite des Lasttragteils (10) verstellbar ist.

14. Transportfahrzeug nach Anspruch 13, **dadurch gekennzeichnet, dass** der Schwanenhals (12) einen lösbar mit dem Lasttragteil (10) verbindbaren Kupplungsteil (114) aufweist, der zwei quer zur Längsmittelebene (26) des Transportfahrzeugs verstellbare und starr mit den Fahrgestellteilen (28) verbindbare Seitenteile (124) umfasst.

15. Transportfahrzeug nach Anspruch 13 oder 14, **dadurch gekennzeichnet, dass** der Schwanenhals (12) zwei Teile (110; 112) umfasst, die in Bezug zueinander hydraulisch gesteuert um eine zur Längsmittelebene (26) senkrechte Schwenkachse (111) schwenkbar sind.

16. Transportfahrzeug nach einem der Ansprüche 1 bis 14, **gekennzeichnet durch** einen Lasttragteil (10) und eine mit dem Lasttragteil (10) verbundene Zugdeichsel (13).

17. Transportfahrzeug nach Anspruch 16, **dadurch gekennzeichnet, dass** die Zugdeichsel (13) zwei Elemente (144, 146) umfasst, die in Bezug zueinander hydraulisch gesteuert um eine zum Untergrund (32) senkrechte Schwenkachse (148) schwenkbar sind.

## Claims

1. A transport vehicle with variable width and track width, having a chassis (14) and at least one steering axle (16, 18, 20, 22), wherein the chassis (14) comprises two chassis parts (28) each carrying a row of bogies (60) being arranged one after the other and being adjustable transversely to a vertical longitudinal medium plane (26) of the transport vehicle, **characterized in that** only a single length-adjustable transverse track rod (72) is arranged between the two rows of bogies (60), which connects two bogies (60) of the one or one of the steering axles (16, 18, 20, 22) and whose length is adjustable by an amount corresponding to the amount of enlargement or reduction of the width and track width, that each of the steering arms (70) connected via the transverse track rod (72) is connected via a longitudinal track rod (100, 102) with a steering arm (66) of an adjacent bogie (60) of the same row.

2. The transport vehicle according to claim 1, **characterized in that** at least one steering arm (66) of one bogie (60) in each row is connected via two longitudinal track rods (102, 104) with steering arms (66) of two adjacent bogies (60) of the same row.

3. The transport vehicle according to one of the previous claims, **characterized in that** the transverse track rod (72) is telescopable and comprises at least two tube-like elements (74, 76, 78) which are displaceable in relation to each other in direction of the longitudinal axis of the transverse track rod (72) and are fixable in a predefined displacement position.

4. The transport vehicle according to one of the previous claims, **characterized in that** the transverse track rod (72) comprises at least three tube-like elements (74, 76, 78) which are displaceable in relation to each other in direction of a longitudinal axis of the transverse track rod (72) and are fixable in a predefined displacement position.

5. The transport vehicle according to claim 3 or 4, **characterized in that** the adjacent tube-like elements (74, 76; 76, 78) are fixable in relation to each other only in a completely retracted or completely extended displacement position.

6. The transport vehicle according to claim 5, **characterized in that** a length difference between the displacement positions corresponds to the amount of the changing of the track width and width.

7. The transport vehicle according to claims 3 to 6, **characterized in that** the tube-like elements (74, 76, 78) are fixable via locking bolts (94, 96) which extend through aligned transverse track rods (84, 86, 90) of at least two of the tube-like elements (74, 76, 78).

8. The transport vehicle according to claim 1, **characterized by** means (52) for lifting the chassis (14) before changing the width and the track width.

9. The transport vehicle according to claim 8, **characterized by** at least one mobile hydraulic cylinder (38) for moving the two chassis parts (28), wherein the mobile hydraulic cylinder (38) is alternately applicable between a center chassis part (24) and the one or the other of the two chassis parts (28).

10. The transport vehicle according to one of the previous claims, **characterized in that** the chassis (14) comprises a center longitudinal carrier (24) and at least one, preferably two side longitudinal carriers (28) whose distance to the center longitudinal carrier (24) is variable, and that the center longitudinal carrier (24) and at least one of the side longitudinal carriers (28) are connected to each other via transverse carriers (30, 30').

11. The transport vehicle according to claim 10, **characterized in that** at least one transverse carrier (30) is formed telescopable.

12. The transport vehicle according to claim 10 or 11, **characterized in that** at least one side longitudinal carrier (28) is displaceably arranged at the transverse carriers (30').

13. The transport vehicle according to one of the previous claims, **characterized by** a load-carrying part (10) and a goose-neck (12) connected with the load-carrying part (10), whose width can be adjusted according to the amount of enlargement or reduction of the track width and width of the load-carrying part (10).

14. The transport vehicle according to claim 13, **characterized in that** the goose-neck (12) comprises a coupling element (114) releasably connectable with the load-carrying part (10), which comprises two side parts (124) which are displaceable transversely to the longitudinal medium plane (26) of the transport vehicle and are rigidly connectable with the chassis parts (28).

15. The transport vehicle according to claim 13 or 14, **characterized in that** the goose-neck (12) comprises two parts (110; 112) which are, in relation to each other, hydraulically controllably pivotable about a pivot axis (111) orthogonal to the longitudinal medium plane (26).

16. The transport vehicle according to one of the claims 1 to 14, **characterized by** a load-carrying part (10) and a drawbar (13) connected with the load-carrying part (10).

17. Transport vehicle according to claim 16, **characterized in that** the drawbar (13) comprises two elements (144, 146) which are, in relation to each other, hydraulically controllably pivotable about a pivot axis (148) orthogonal to the ground (32).

## Revendications

1. Véhicule de transport présentant une largeur et un empattement variables, un châssis (14) et au moins un essieu directeur (16, 18, 20, 22), sachant que le châssis (14) comprend deux parties de châssis (28), qui supportent respectivement une rangée de bogies (60) disposés les uns derrière les autres et qui peuvent être ajustés de manière transversale par rapport à un plan central longitudinal (26) vertical du véhicule de transport, **caractérisé en ce qu'**est disposée entre les deux rangées de bogies (60) seulement une unique barre d'accouplement transversale (72) pouvant être ajustée en longueur, laquelle relie deux bogies (60) de l'essieu de direction ou d'un essieu de direction (16, 18, 20, 22) et dont la longueur peut être ajustée d'une mesure correspondant à la mesure de l'agrandissement ou de la réduction de la largeur et de l'empattement, **en ce que** ladite barre d'accouplement transversale (72) relie deux leviers de direction (70), qui sont articulés respectivement entre deux bogies (60) adjacents dudit essieu directeur au niveau de l'une des deux parties de châssis (28), et **en ce que** chacun des leviers directeurs (70) reliés par la barre d'accouplement transversale (72) est relié par une barre d'accouplement longitudinale (100, 102) à un levier directeur (66) d'un bogie (60) adjacent de la même rangée.

2. Véhicule de transport selon la revendication 1, **caractérisé en ce qu'**au moins un levier directeur (66) d'un bogie (60) est replié dans chaque rangée par deux barres d'accouplement longitudinales (102, 104) à des leviers directeurs (66) de deux bogies (60) adjacents de la même rangée.

3. Véhicule de transport selon l'une quelconque des revendications précédentes, **caractérisé en ce que** la barre d'accouplement transversale (72) est télescopique et comprend au moins deux éléments (74, 76, 78) de forme tubulaire, qui peuvent être déplacés par coulissement les uns par rapport aux autres en direction d'un axe longitudinal de la barre d'accouplement transversale (72) et peuvent être fixés dans des positions de déplacement par coulissement prédéfinies.

4. Véhicule de transport selon l'une quelconque des revendications précédentes, **caractérisé en ce que** la barre d'accouplement transversale (72) comprend au moins trois éléments (74, 76, 78) de forme tubulaire, qui peuvent être déplacés par coulissement les uns par rapport aux autres en direction d'un axe longitudinal de la barre d'accouplement transversale (72) et qui peuvent être fixés dans des positions de déplacement par coulissement prédéfinies.

5. Véhicule de transport selon la revendication 3 ou 4, **caractérisé en ce que** les éléments (74, 76 ; 76, 78) adjacents de forme tubulaire peuvent être fixés les uns par rapport aux autres respectivement seulement dans une position de déplacement par coulissement rentrée en totalité et dans une position de déplacement par coulissement déployée en totalité.

6. Véhicule de transport selon la revendication 5, **caractérisé en ce qu'**une différence de longueur entre les positions de déplacement par coulissement correspond à la mesure de la modification de l'empattement et de la largeur.

7. Véhicule de transport selon l'une quelconque des revendications 3 à 6, **caractérisé en ce que** les éléments (74, 76, 78) de forme tubulaire peuvent être fixés au moyen de boulons de blocage (94, 96), qui s'étendent à travers des alésages transversaux (84, 86, 90) alignés d'au moins deux éléments (74, 76, 78) de forme tubulaire.

8. Véhicule de transport selon la revendication 1, **caractérisé par** des moyens (52) servant à relever le châssis (14) avant de modifier la largeur et l'empattement.

9. Véhicule de transport selon la revendication 8, **caractérisé par** au moins un cylindre hydraulique (38) mobile servant à déplacer les deux parties de châssis (28), sachant que le cylindre hydraulique (38) mobile peut être inséré en alternance entre une partie de châssis centrale (24) et l'une ou l'autre des deux parties de châssis (28).

10. Véhicule de transport selon l'une quelconque des revendications précédentes, **caractérisé en ce que** le châssis (14) présente un support longitudinal central (24) et au moins un, de préférence deux supports longitudinaux latéraux (28), dont la distance par rapport au support longitudinal central (24) peut varier, et **en ce que** le support longitudinal central (24) et le ou les supports longitudinaux latéraux (28) sont reliés les uns aux autres par des supports transversaux (30 ; 30').

11. Véhicule de transport selon la revendication 10, **caractérisé en ce qu'**au moins un support transversal (30) est réalisé de manière télescopique.

12. Véhicule de transport selon la revendication 10 ou 11, **caractérisé en ce qu'**au moins un support longitudinal (28) latéral est disposé de manière à pouvoir être déplacé par coulissement au niveau des supports transversaux (30').

13. Véhicule de transport selon l'une quelconque des revendications précédentes, **caractérisé par** une partie de support de charges (10) et par un col de cygne (12) relié à la partie de support de charges (10), dont la largeur peut être ajustée de manière à correspondre à la mesure de l'agrandissement ou de la réduction de l'empattement et de la largeur de la partie de support de charges (10).

14. Véhicule de transport selon la revendication 13, **caractérisé en ce que** le col de cygne (12) présente une partie de couplage (114) pouvant être reliée de manière amovible à la partie de support de charges (10), laquelle comprend deux parties latérales (124) pouvant être ajustées de manière transversale par rapport au plan central longitudinal (26) du véhicule de transport et pouvant être reliées de marnière rigide aux parties de châssis (28).

15. Véhicule de transport selon la revendication 13 ou 14, **caractérisé en ce que** le col de cygne (12) comprend deux parties (110 ; 112), qui peuvent pivoter l'une par rapport à l'autre de manière commandée hydrauliquement autour d'un axe de pivotement (111) perpendiculaire par rapport au plan central longitudinal (26).

16. Véhicule de transport selon l'une quelconque des revendications 1 à 14, **caractérisé par** une partie de support de charges (10) et par un timon (13) relié à la partie de support de charges (10).

17. Véhicule de transport selon la revendication 16, **caractérisé en ce que** le timon (13) comprend deux éléments (144, 146), qui peuvent pivoter l'un par rapport à l'autre de manière commandée hydrauliquement autour d'un axe de pivotement (148) perpendiculaire par rapport au sol (32).
